# EUROPÄISCHE PATENTSCHRIFT

(11) **EP 3 736 654 B1**
(45) Veröffentlichungstag und Bekanntmachung des Hinweises auf die Patenterteilung: **26.01.2022**
(21) Anmeldenummer: 20173248.4
(22) Anmeldetag: 06.05.2020
(51) Int. Cl.: G05D 16/06, F16K 31/12, F24D 19/10

(54) **DRUCKMINDERER**
PRESSURE REDUCER
RÉDUCTEUR DE PRESSION

(30) Priorität: 08.05.2019 DE 102019111981
(43) Veröffentlichungstag der Anmeldung: 11.11.2020
(73) Patentinhaber: Pittway Sarl, 1180 Rolle (CH)
(72) Erfinder: Weidner, Kurt, 73434 Aalen (DE)
(74) Vertreter: Sturm, Christoph

(56) Entgegenhaltungen:
- WO-A1-2014/029699
- DE-A1-102007 026 162

## Beschreibung

Die Erfindung betrifft einen Druckminderer nach dem Oberbegriff des Anspruchs 1 oder 2.

Druckminderer finden vorzugsweise in Industrieanlagen und Wasserversorgungsanlagen von Häusern oder Gebäuden Anwendung, um bei einem schwankenden Eingangsdruck einen konstanten Ausgangsdruck zur Verfügung zu stellen. Die Installation eines Druckminderers erfolgt hierbei vorzugsweise in einem Keller eines Gebäudes oder in einem Versorgungsschacht, sodass die Gefahr des Einfrierens des Druckminderers nicht besteht. Die Notwendigkeit, einen konstanten Wasserdruck zur Verfügung zu stellen, besteht aber nicht nur bei Industrieanlagen und Wasserversorgungsanlagen, vielmehr gibt es auch andere Anwendungsgebiete die mit einem konstanten Wasserdruck versorgt werden müssen. Im Freien installierte Druckminderer sind bei Frost außer Betrieb gesetzt, wozu eine Entleerung derselben erfolgt.

Ein Druckminderer ist aus der DE 195 39 239 C2 bekannt. So umfasst der aus diesem Stand der Technik bekannte Druckminderer ein Gehäuse und ein in dem Gehäuse positioniertes Ventil, wobei das Ventil in geschlossenem Zustand desselben einen Vordruckraum des Gehäuses von einem Hinterdruckraum des Gehäuses trennt und in geöffnetem Zustand desselben den Vordruckraum und den Hinterdruckraum verbindet. Das Ventil des aus diesem Stand der Technik bekannten Druckminderers verfügt über eine auf einen Ventilstößel einwirkende Membran, auf die unter Bereitstellung einer Druckminderer-Funktion einerseits eine in Öffnungsrichtung des Ventils wirkende Federkraft eines Federelements und andererseits eine in Schließrichtung des Ventils wirkende, vom im Hinterdruckraum herrschenden Druck abhängige Kraft einwirkt.

Am Ventilstößel ist ein Ventilkörper befestigt, der im geschlossenen Zustand des Ventils mit einem Dichtelement gegen einen Ventilsitz drückt und im geöffneten

Zustand des Ventils vom Ventilsitz abgehoben ist. Das Federelement ist zwischen vorzugsweise zwei Federtellern angeordnet, nämlich zwischen einem der Membran zugewandten Federteller und einem von der Membran abgewandten Federteller.

Insbesondere bei einem in einem Gebäude oder einem Haus installierten Druckminderer können dann, wenn in der Wasserversorgungsanlage stromabwärts des Druckminderers eine Leckagestelle vorliegt, durch die Leckage erhebliche Schäden verursacht werden. Bislang bereitet es Schwierigkeiten, eine derartige Leckage, die sich stromabwärts eines Druckminderers ausbilden kann, sicher zu detektieren.

Aus der EP 3 239 682 A1 ist eine Vorrichtung zur Detektion von Leckage in einer Wasserversorgungsanlage bekannt. In diesem Stand der Technik wird vorgeschlagen, an der Leckagedetektionsvorrichtung die Bewegung eines Stößels mithilfe eines Sensors zu detektieren und abhängig von der Bewegung des Stößels auf das Vorliegen einer Leckage zu schließen.

Bei der aus der EP 3 239 682 A1 bekannten Vorrichtung zur Detektion von Leckage handelt es sich um eine separate Baugruppe, die separat in einer Wasserversorgungsanlage verbaut werden muss.

DE 10 2007 026 162 A1 offenbart einen Druckminderer nach dem Oberbegriff des Anspruchs 1 oder 2.

Der Erfindung liegt die Aufgabe zu Grunde, einen neuartigen Druckminderer zu schaffen.

Diese Aufgabe wird durch einen Druckminderer gemäß Anspruch 1 und durch einen Druckminderer gemäß Anspruch 2 gelöst.

Nach Anspruch 1 ist der Sensor in einen nicht-fluidführenden Bereich des Druckminderes integriert. Entweder ist der Sensor einem Abschnitt des Ventilstößels zugordnet oder wirkt mit einem Abschnitt des Ventilstößels zusammen, der in den nichtfluidführenden Bereich des Druckminderes hineinragt, alternativ ist der Sensor dem der Membran zugewandten Federteller zugordnet oder wirkt mit dem der Membran zugewandten Federteller zusammen.

Die Integration des Sensors in den nicht-fluidführenden Bereich des Druckminderers, insbesondere die Zuordnung desselben zu oder das Zusammenwirken desselben mit dem der Membran zugewandten Federteller, ist zur Integration des Sensors in den Druckminderer besonders bevorzugt. Insbesondere kommt ein kapazitiver Sensor oder induktiver Sensor zum Einsatz, der eine leckagebedingte Bewegung des der Membran zugewandten Federtellers im Mikrometerbereich erfasst.

Nach Anspruch 2 ist der Sensor in einen fluidführenden Bereich des Druckminderes integriert, nämlich derart, dass der Sensor einem Abschnitt des Ventilstößels zugordnet ist oder mit einem Abschnitt des Ventilstößels zusammenwirkt, der in den fluidführenden Bereich des Druckminderes hineinragt.

Nach einer vorteilhaften Weiterbildung der Erfindung ist der Sensor mit einem Steuergerät gekoppelt, welches dann, wenn dasselbe eine Lackage detektiert, die größer als ein Grenzwert ist, das Ventil schließt. Hiermit ist es dann möglich, nicht nur die Leckage zu detektieren, sondern vielmehr bei einer detektierten Leckage das Ventil zu schließen, um leckagebedingte Schäden zu vermeiden.

Bevorzugte Weiterbildungen der Erfindung ergeben sich aus den Unteransprüchen und der nachfolgenden Beschreibung. Nachfolgend wird ein Ausführungsbeispiel der Erfindung, ohne hierauf beschränkt zu sein, anhand der Zeichnung näher erläutert. In der Zeichnung zeigt:
- Fig. 1: einen Querschnitt durch ein erstes Ausführungsbeispiel eines erfindungsgemäßen Druckminderers;
- Fig. 2: einen Querschnitt durch ein zweites Ausführungsbeispiel eines erfindungsgemäßen Druckminderers;
- Fig. 3: einen Querschnitt durch ein drittes Ausführungsbeispiel eines erfindungsgemäßen Druckminderers.

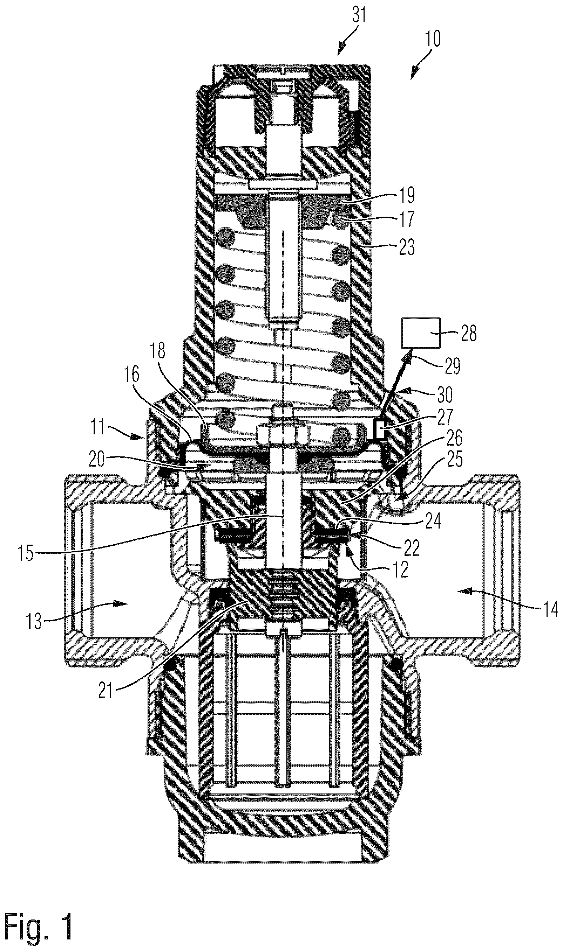

Fig. 1, 2 und 3 zeigen jeweils einen Querschnitt durch ein jeweiliges Ausführungsbeispiel eines erfindungsgemäßen Druckminderers 10.

Der erfindungsgemäße Druckminderer 10 verfügt über ein Gehäuse 11, wobei im Gehäuse 11 ein Ventil 12 positioniert ist. Das Ventil 12 trennt im geschlossenen Zustand einen Vordruckraum 13 des Gehäuses 11 von einem Hinterdruckraum 14 des Gehäuses 11, wobei im geöffneten Zustand des Ventils 12 der Vordruckraum 13 und der Hinterdruckraum 14 gekoppelt sind.

Das Ventil 12 des Druckminderers 10 verfügt über einen Ventilstößel 15, an welchem eine Membran 16 angreift. Auf die Membran 16 wirkt eine Federkraft ein, die von einem Federelement 17 bereitgestellt wird, wobei das Federelement 17 gemäß Fig. 1 zwischen zwei Federtellern 18, 19 angeordnet ist. Ein erster Federteller 18 ist der Membran 16 zugewandt. Ein zweiter Federteller 19 ist von der Membran 16 abgewandt. Der erste Federteller 18 und die Membran 16 sind aneinander befestigt.

Auf die Membran 16 wirkt zusätzlich zu der Federkraft des Federelements 17 eine Kraft ein, die in Schließrichtung des Ventils 12 des Druckminderers 10 wirkt, wobei diese Kraft abhängig von einem Druck ist, der in einem von der Membran 16 begrenzten Druckraum 20 herrscht. Dieser im Druckraum 20 herrschende Druck bzw. die von diesem Druck abhängige und in Schließrichtung des Ventils 12 des Druckminderers 10 wirkende Kraft ist von dem im Hinterdruckraum 14 herrschenden Druck abhängig. Druckraum 20 und Hinterdruckraum 14 sind über eine Druckleitung 25 gekoppelt.

An dem Ventilstößel 15 greift nicht nur die Membran 16 an, sondern vielmehr auch ein Ventilkörper 21. Im geschlossenen Zustand des Ventils 12 des Druckminderers 10 liegt der Ventilkörper 21 an einem Ventilsitz 22 dichtend an, wobei im geöffneten Zustand des Ventils 12 der Ventilkörper 21 vom Ventilsitz 22 abgehoben ist.

Der Ventilsitz 22 ist von einem Dichtelement 24 bereitgestellt, das an einem Tragelement 26 befestigt ist.

Wie Fig. 1 entnommen werden kann, ist das Federelement 17 in einem von einem Federhauben-Abschnitt 23 des Gehäuses 11 begrenzten Innenraum aufgenommen, und zwar zusammen mit den Federtellern 18, 19. Auf der dem Federelement 17 zugewandten Seite der Membran 16 greift in einen mittleren Abschnitt der Membran 16 der erste Federteller 18 an.

Die Membran 16 des Druckminderers 10 trennt einen fluidführenden Bereich des Druckminderers 10 von einem nicht-fluidführenden Bereich desselben. Der Vordruckraum 13, der Hinterdruckraum 14 und der unterhalb der Membran 16 positionierte Druckraum 20 sind fluidführend.

Der vom Federhauben-Abschnitt 23 des Gehäuses 11 definierte Raum, in welchem das Federelement 17 und die beiden Federteller 18, 19 angeordnet sind, ist nicht-fluidführend.

Das Federelement 17 sowie die beiden Federteller 18, 19 kommen demnach nicht mit Fluid bzw. Wasser in Kontakt. Der Ventilkörper 21 hingegen ist der Fluidströmung ausgesetzt und kommt damit mit Fluid bzw. Wasser in Kontakt. Der Ventilstößel 15 verfügt über einen Abschnitt, der in den nicht-fluidführenden Bereich des Druckminderers 10 hineinragt, sowie über einen Abschnitt, der in den fluidführenden Bereich des Druckminderers 10 hineinragt.

In den Druckminderer 10 ist ein Sensor 27 zur Detektion von Leckage integriert, wobei der Sensor 27 der Detektion von Leckage bei geschlossenem Ventil 12 in eine mit dem Hinterdruckraum 14 gekoppelten Fluidraum oder einer mit dem Hinterdruckraum 14 gekoppelten Fluidleitung einer Wasserversorgungsanlage oder Industrieanlage dient, in welcher der Druckminderer verbaut ist.

Im gezeigten, bevorzugten Ausführungsbeispiel ist dieser Sensor 27 zur Leckagedetektion in den nicht-fluidführenden Bereich des Druckminderers 10 integriert, wobei der Sensor 27 im gezeigten, bevorzugten Ausführungsbeispiel dem der Membran 16 zugewandten Federteller 18 zugeordnet ist bzw. dem der Membran 16 zugewandten Federteller 18 zusammenwirkt.

Ist das Ventil 12 des Druckminderers 10 geschlossen und der ereignet sich stromabwärts des Ventils 12 in dem mit dem Hinterdruckraum 14 gekoppelten Fluidraum oder der Fluidleitung eine Leckage, so führt dies zu einer Bewegung des Ventils 12 im Mikrometerbereich, wodurch letztendlich eine Bewegung des der Membran 16 zugewandten Federtellers 18 im Mikrometerbereich verursacht wird, die mithilfe des Sensors 27 detektiert werden kann.

Der Sensor 27 ist vorzugsweise an einer Innenseite des Federhauben-Abschnitts 23 des Gehäuses 11 montiert und auf den der Membran 16 zugewandten Federteller 18 gerichtet, um so eine Bewegung dieses Federtellers 18 im Mikrometerbereich zu erfassen.

Bei dem Sensor 27 handelt es sich vorzugsweise um einen kapazitiven oder induktiven Sensor.

Der Sensor 27 ist mit einem Steuergerät 28 über eine Datenleitung 29 gekoppelt, die durch eine entsprechende Öffnung 30 im Federhauben-Abschnitt 23 des Gehäuses 11 geführt ist.

Obwohl die Anordnung des Sensors 27 an der in Fig. 1 gezeigten Position, also die Zuordnung oder das Zusammenwirken desselben zu dem der Membran 16 zugewandten Federteller 18 besonders bevorzugt ist, kann der Sensor 27 auch an anderen Positionen in den Druckminderer 10 integriert werden. So ist es zum Beispiel möglich, den Sensor 27 demjenigen Abschnitt des Ventilstößels 15 zuzuordnen, der in den nicht-fluidführenden Bereich des Druckminderers 10 hineinragt. Hierbei wäre es jedoch dann erforderlich, die Datenleitung 29 über das Federelement 17 nach außen zu führen. Auch ist es grundsätzlich möglich, den Sensor 27 zur Detektion von Leckage in den fluidführenden Bereich des Druckminderers zu integrieren, und zwar dem in den fluidführenden Bereich des Druckminderers hineinragenden Abschnitt des Ventilstößels 15 zuzuordnen.

Bei dem in Fig. 1 gezeigten Druckminderer 10 handelt es sich um einen ausschließlich manuell betätigten Druckminderer, der über eine Verstelleinrichtung 31 zur manuellen Verstellung verfügt.

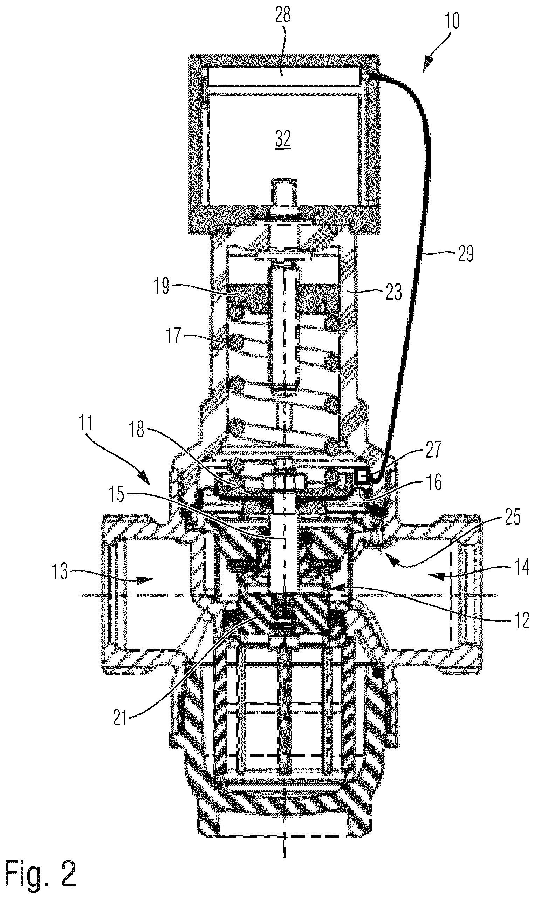

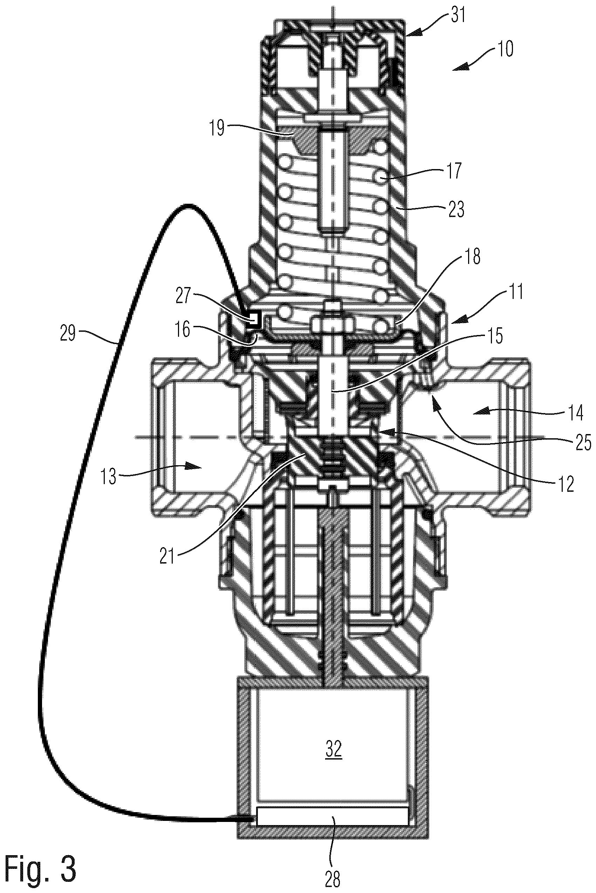

Demgegenüber zeigen Fig. 2 und 3 jeweils Ausführungen von Druckminderern 10, die über einen Aktuator 32 zur automatischen Betätigung des Druckminderers 10 verfügen. Hinsichtlich der übrigen Details stimmen die Druckminderer 10 der Fig. 2 und 3 mit dem Druckminderer 10 der Fig. 1 grundsätzlich überein, sodass zur Vermeidung unnötiger Wiederholungen für gleiche Baugruppen gleiche Bezugsziffern verwendet werden.

So ist auch in den Druckminderer 10 der Fig. 2 und 3 ein Sensor 27 zur Leckagedetektion integriert, der mit einem Steuergerät 28 gekoppelt ist. Dann, wenn das Steuergerät 28 auf Basis des vom Sensor 27 bereitgestellten Messsignals eine Leckage detektiert, die größer als ein Grenzwert ist, kann der Aktuator 32 gesteuert über das Steuergerät 28 das Ventil 12 in Schließrichtung betätigen und demnach schließen, um eine weitere Leckage zu vermeiden.

In Fig. 2 ist dabei die Einheit aus Aktuator 32 und Steuergerät 28 auf dem Federhauben-Abschnitt 23 des Gehäuses 11 montiert. Zum Schließen des Ventils 32 zieht dabei der Aktuator 32 am Ventilstößel 15.

In Fig. 3 hingegen ist die Einheit aus Aktuator 32 und Steuergerät 28 auf der dem Federhauben-Abschnitt 23 gegenüberliegenden Seite des Druckminderers 10 montiert, wobei dann in Fig. 3 zum Schließen des Ventils 12 der Aktuator 32 den Ventilkörper 21 gegen den Ventilsitz über den Ventilstößel 15 drückt.

### Bezugszeichenliste

- 10: Druckminderer
- 11: Gehäuse
- 12: Ventil
- 13: Vordruckraum
- 14: Hinterdruckraum
- 15: Ventilstößel
- 16: Membran
- 17: Federelement
- 18: Federteller
- 19: Federteller
- 20: Druckraum
- 21: Ventilkörper
- 22: Ventilsitz
- 23: Federhauben-Abschnitt
- 24: Dichtelement
- 25: Druckleitung
- 26: Tragelement
- 27: Sensor
- 28: Steuergerät
- 29: Datenleitung
- 30: Öffnung
- 31: Verstelleinrichtung
- 32: Aktuator

## Patentansprüche

1. Druckminderer (10),
mit einem Gehäuse (11),
mit einem in dem Gehäuse (11) positionierten Ventil (12),
wobei das Ventil (12) in geschlossenem Zustand einen Vordruckraum (13) des Gehäuses (11) von einem Hinterdruckraum (14) des Gehäuses (11) trennt und in geöffnetem Zustand den Vordruckraum (13) und den Hinterdruckraum (14) verbindet,
wobei das Ventil (12) eine auf einen Ventilstößel (15) einwirkende Membran (16) aufweist, auf die unter Bereitstellung einer Druckminderer-Funktion einerseits eine in Öffnungsrichtung des Ventils (12) wirkende Federkraft eines Federelements (17) und andererseits eine in Schließrichtung des Ventils (12) wirkende, von einem im Hinterdruckraum (14) herrschenden Druck abhängige Kraft einwirkt,
wobei das Ventil (12) einen an dem Ventilstößel (15) befestigten Ventilkörper (21) aufweist, der in geschlossenem Zustand an einem Ventilsitz (22) dichtend anliegt und der in geöffnetem Zustand von dem Ventilsitz (22) abgehoben ist, und
wobei das Federelement (17) zwischen Federtellern (18, 19) angeordnet ist, nämlich zwischen einem der Membran (16) zugewandten Federteller (18) und einem von der Membran (16) abgewandten Federteller (19),
mit einem in den Druckminderer integrierten Sensor (27) zur Detektion von Leckage,
**dadurch gekennzeichnet, dass**
der Sensor (27) in einen nicht-fluidführenden Bereich des Druckminderes integriert ist, derart, dass
entweder der Sensor (27) einem Abschnitt des Ventilstößels (15) zugordnet ist oder mit einem Abschnitt des Ventilstößels (15) zusammenwirkt, der in den nicht-fluidführenden Bereich des Druckminderes hineinragt,
oder der Sensor (27) dem der Membran (16) zugewandten Federteller (18) zugordnet ist oder mit dem der Membran (16) zugewandten Federteller (18) zusammenwirkt.

2. Druckminderer (10),
mit einem Gehäuse (11),
mit einem in dem Gehäuse (11) positionierten Ventil (12),
wobei das Ventil (12) in geschlossenem Zustand einen Vordruckraum (13) des Gehäuses (11) von einem Hinterdruckraum (14) des Gehäuses (11) trennt und in geöffnetem Zustand den Vordruckraum (13) und den Hinterdruckraum (14) verbindet,
wobei das Ventil (12) eine auf einen Ventilstößel (15) einwirkende Membran (16) aufweist, auf die unter Bereitstellung einer Druckminderer-Funktion einerseits eine in Öffnungsrichtung des Ventils (12) wirkende Federkraft eines Federelements (17) und andererseits eine in Schließrichtung des Ventils (12) wirkende, von einem im Hinterdruckraum (14) herrschenden Druck abhängige Kraft einwirkt,
wobei das Ventil (12) einen an dem Ventilstößel (15) befestigten Ventilkörper (21) aufweist, der in geschlossenem Zustand an einem Ventilsitz (22) dichtend anliegt und der in geöffnetem Zustand von dem Ventilsitz (22) abgehoben ist, und
wobei das Federelement (17) zwischen Federtellern (18, 19) angeordnet ist, nämlich zwischen einem der Membran (16) zugewandten Federteller (18) und einem von der Membran (16) abgewandten Federteller (19),
mit einem in den Druckminderer integrierten Sensor (27) zur Detektion von Leckage,
**dadurch gekennzeichnet, dass**
der Sensor (27) in einen fluidführenden Bereich des Druckminderes integriert ist, derart, dass der Sensor (27) einem Abschnitt des Ventilstößels (15) zugordnet ist oder mit einem Abschnitt des Ventilstößels (15) zusammenwirkt, der in den fluidführenden Bereich des Druckminderes hineinragt.

3. Druckminderer nach Anspruch 1 oder 2, **dadurch gekennzeichnet, dass** der Sensor (27) der Detektion von Leckage bei geschlossenem Ventil (12) in einem mit dem Hinterdruckraum (14) gekoppelten Fluidraum oder in einer mit dem Hinterdruckraum (14) gekoppelten Fluidleitung dient.

4. Druckminderer nach einem der Ansprüche 1 bis 3, **dadurch gekennzeichnet, dass** der Sensor (27) mit einem Steuergerät (28) gekoppelt ist, welches dann, wenn dasselbe eine Lackage detektiert, die größer als ein Grenzwert ist, das Ventil (12) schließt.

## Claims

1. Pressure reducer (10),
having a housing (11),
having a valve (12) which is positioned in the housing (11),
wherein the valve (12), in a closed state, separates an inlet pressure chamber (13) of the housing (11) from an outlet pressure chamber (14) of the housing (11) and, in an open state, connects the inlet pressure chamber (13) and the outlet pressure chamber (14),
wherein the valve (12) has a diaphragm (16) which acts on a valve plunger (15) and on which, with provision of a pressure reducer function, a spring force of a spring element (17) that acts in the opening direction of the valve (12), on the one hand, and a force which acts in the closing direction of the valve (12) and is dependent on a pressure prevailing in the outlet pressure chamber (14), on the other hand, act,
wherein the valve (12) has a valve body (21) which is fastened to the valve plunger (15) and which, in the closed state, bears sealingly against a valve seat (22) and which, in the open state, is lifted off from the valve seat (22), and
wherein the spring element (17) is arranged between spring plates (18, 19), specifically between a spring plate (18) facing the diaphragm (16) and a spring plate (19) facing away from the diaphragm (16),
having a sensor (27) which is integrated into the pressure reducer and serves for detection of leakage,
**characterized in that**
the sensor (27) is integrated into a non-fluid-conducting region of the pressure reducer in such a way that
either the sensor (27) is assigned to a portion of the valve plunger (15), or interacts with a portion of the valve plunger (15), that projects into the non-fluid-conducting region of the pressure reducer,
or the sensor (27) is assigned to the spring plate (18) facing the diaphragm (16) or interacts with the spring plate (18) facing the diaphragm (16) .

2. Pressure reducer (10),
having a housing (11),
having a valve (12) which is positioned in the housing (11),
wherein the valve (12), in a closed state, separates an inlet pressure chamber (13) of the housing (11) from an outlet pressure chamber (14) of the housing (11) and, in an open state, connects the inlet pressure chamber (13) and the outlet pressure chamber (14),
wherein the valve (12) has a diaphragm (16) which acts on a valve plunger (15) and on which, with provision of a pressure reducer function, a spring force of a spring element (17) that acts in the opening direction of the valve (12), on the one hand, and a force which acts in the closing direction of the valve (12) and is dependent on a pressure prevailing in the outlet pressure chamber (14), on the other hand, act,
wherein the valve (12) has a valve body (21) which is fastened to the valve plunger (15) and which, in the closed state, bears sealingly against a valve seat (22) and which, in the open state, is lifted off from the valve seat (22), and
wherein the spring element (17) is arranged between spring plates (18, 19), specifically between a spring plate (18) facing the diaphragm (16) and a spring plate (19) facing away from the diaphragm (16),
having a sensor (27) which is integrated into the pressure reducer and serves for detection of leakage,
**characterized in that**
the sensor (27) is integrated into a fluid-conducting region of the pressure reducer in such a way that the sensor (27) is assigned to a portion of the valve plunger (15), or interacts with a portion of the valve plunger (15), that projects into the fluid-conducting region of the pressure reducer.

3. Pressure reducer according to Claim 1 or 2, **characterized in that** the sensor (27) serves for detection of leakage in a fluid chamber coupled to the outlet pressure chamber (14) or in a fluid line coupled to the outlet pressure chamber (14) with the valve (12) closed.

4. Pressure reducer according to one of Claims 1 to 3, **characterized in that** the sensor (27) is coupled to a control unit (28) which, when it detects leakage of an extent to which a limit value is exceeded, closes the valve (12).

## Revendications

1. Réducteur de pression (10), comprenant un boîtier (11),
une vanne (12) positionnée dans le boîtier (11),
la vanne (12) séparant à l'état fermé une chambre de pression amont (13) du boîtier (11) d'une chambre de pression aval (14) du boîtier (11) et reliant, à l'état ouvert, la chambre de pression amont (13) et la chambre de pression aval (14),
la vanne (12) comportant une membrane (16) qui agit sur un poussoir de vanne (15) et sur laquelle agissent, en assurant une fonction de réduction de pression, d'une part une force de ressort d'un élément à ressort (17), laquelle agit dans le sens d'ouverture de la vanne (12), et d'autre part une force, qui dépend d'une pression régnant dans la chambre de pression aval (14) et qui agit dans le sens de fermeture,
la vanne (12) comportant un corps de vanne (21) qui est fixé au poussoir de vanne (15) et qui, à l'état fermé, est en appui de manière étanche sur un siège de vanne (22) et, à l'état ouvert, est soulevé du siège de vanne (22), et
l'élément à ressort (17) étant disposé entre des plaques à ressort (18, 19), à savoir entre une plaque à ressort (18) dirigée vers la membrane (16) et une plaque à ressort (19) dirigée à l'opposé de la membrane (16),
un capteur (27) intégré dans le réducteur de pression et destiné à détecter des fuites,
**caractérisé en ce que**
le capteur (27) est intégré dans une zone non-conductrice de fluide du réducteur de pression, de manière à ce que
soit le capteur (27) est associé à une portion du poussoir de vanne (15) ou coopère avec une portion du poussoir de vanne (15) qui fait saillie dans la zone non-conductrice de fluide du réducteur de pression,
soit le capteur (27) est associé à la plaque à ressort (18) dirigée vers la membrane (16) ou coopère avec la plaque à ressort (18) dirigée vers la membrane (16) .

2. Réducteur de pression (10), comprenant un boîtier (11),
une vanne (12) positionnée dans le boîtier (11),
la vanne (12) séparant à l'état fermé une chambre de pression amont (13) du boîtier (11) d'une chambre de pression aval (14) du boîtier (11) et reliant, à l'état ouvert, la chambre de pression amont (13) et la chambre de pression aval (14),
la vanne (12) comportant une membrane (16) qui agit sur un poussoir de vanne (15) et sur laquelle agissent, en assurant une fonction de réduction de pression, d'une part une force de ressort d'un élément à ressort (17), laquelle agit dans le sens d'ouverture de la vanne (12), et d'autre part une force qui dépend d'une pression régnant dans la chambre de pression aval (14) et qui agit dans le sens de fermeture,
la vanne (12) comportant un corps de vanne (21) qui est fixé au poussoir de vanne (15) et qui, à l'état fermé, est en appui de manière étanche sur un siège de vanne (22) et, à l'état ouvert, est soulevé du siège de vanne (22), et
l'élément à ressort (17) étant disposé entre des plaques à ressort (18, 19), à savoir entre une plaque à ressort (18) dirigée vers la membrane (16) et une plaque à ressort (19) dirigée à l'opposé de la membrane (16),
un capteur (27) intégré dans le réducteur de pression et destiné à détecter des fuites,
**caractérisé en ce que**
le capteur (27) est intégré dans une zone conductrice de fluide du réducteur de pression de manière à ce que le capteur (27) soit associé à une portion du poussoir de vanne (15) ou coopère avec une portion du poussoir de vanne (15) qui fait saillie dans la zone conductrice de fluide du réducteur de pression.

3. Réducteur de pression selon la revendication 1 ou 2, **caractérisé en ce que** le capteur (27) est utilisé pour détecter une fuite, lorsque la vanne (12) est fermée, dans un espace de fluide accouplé à l'espace de pression aval (14) ou dans une conduite de fluide accouplée à l'espace de pression aval (14).

4. Réducteur de pression selon l'une des revendications 1 à 3, **caractérisé en ce que** le capteur (27) est accouplé à une unité de commande (28) qui ferme la vanne (12) seulement lorsqu'elle détecte une fuite qui est supérieure à une valeur limite.
